(19) Europäisches Patentamt
European Patent Office
Office européen des brevets

(11) **EP 2 827 332 B1**

(12) **EUROPEAN PATENT SPECIFICATION**

(45) Date of publication and mention
of the grant of the patent:
**09.09.2020 Bulletin 2020/37**

(51) Int Cl.:
***G11B 27/10*** *(2006.01)*      ***G11B 27/34*** *(2006.01)*
***G06F 3/0484*** *(2013.01)*      ***G06F 3/0485*** *(2013.01)*
***G06F 3/038*** *(2013.01)*

(21) Application number: **13290171.1**

(22) Date of filing: **19.07.2013**

(54) **Navigating within a media item**

Navigation innerhalb eines Medienelements

Navigation dans un élément multimédia

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.01.2015 Bulletin 2015/04**

(73) Proprietor: **NXP B.V.**
**5656 AG Eindhoven (NL)**

(72) Inventor: **Martin, Francois**
**Redhill, Surrey RH1 1SH (GB)**

(74) Representative: **Miles, John Richard**
**NXP SEMICONDUCTORS**
**Intellectual Property Group**
**Abbey House**
**25 Clarendon Road**
**Redhill, Surrey RH1 1QZ (GB)**

(56) References cited:
**EP-A1- 2 466 279      EP-A2- 2 530 677
GB-A- 2 344 453      US-A1- 2002 012 526
US-A1- 2009 282 362**

**Description**

This invention relates to a method and apparatus for user-controlled navigation within a media item. It is particularly relevant for navigating in media having a temporal dimension, such as audio and video media. For example, the navigation may comprise interactively "skipping" or "scrubbing" to a different time-index in the audio or video.

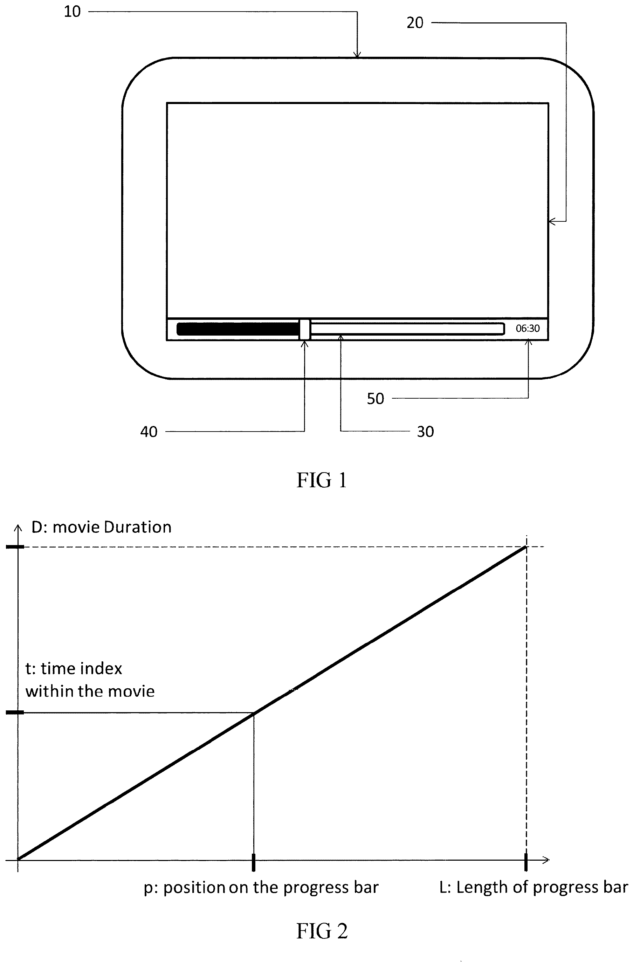

As illustrated in Fig. 1, it is known to provide a video player application on a portable device 10 with a touch screen 20. With such an application the user can navigate within a video sequence, including operations such as playing the video; pausing the playback when desired; and skipping to a different position (that is, time index) in the video by means of a progress bar 30 and a cursor 40. The position of the cursor 40 on the progress bar graphically indicates the time index of the currently displayed frame, in relation to the total duration of the video. A time indicator 50 is often represented on the display, in order to indicate to the user the time index or time stamp of the video frame currently displayed on the screen.

Two methods are known in the art for moving to a different time index within the video. The first is a "Jump" operation. Here, the user touches on the progress bar at a position that is different from the current cursor position. The cursor position will then move to the position chosen by the user. The time indicator and the index within the video stream will be updated according to the newly chosen position. The second method is a "Scrub" operation. Here, the user touches the cursor on the progress bar and drags the cursor to a desired position with his/her finger. The time indicator and the index within the video stream will be updated with each new position of the cursor. Depending of the processing capabilities of the device, the video may be decoded and displayed while scrubbing according to each position of the cursor during scrubbing. If the device is not powerful enough to decode and display the frames during scrubbing, it may instead resume decoding and displaying the video at the new time-index when the cursor is released.

In both cases, moving the cursor position changes the new time index within the video where normal playback shall start. In both cases, the new time index, t, is computed based on the length, L, (in pixels or equivalent graphical user interface units) of the progress bar, the position, p, (in pixels or equivalent graphical user interface units) of the playback cursor, and the duration, D, of the video being played (in milliseconds or seconds). This is done in a linear way, as illustrated in Fig. 2:

$$t = \frac{D \times p}{L} \qquad (1)$$

It is sometimes desired by the user to navigate to a precise frame within the video. For instance, in a video editing application, the user needs to have precise control in order to be able to trim the video at exactly the desired instant. This can be difficult to achieve using the methods summarised above. For instance, consider a movie clip whose duration is 2 hours, being played on a touch-screen device with a display that is 1200 pixels wide. In this case, one pixel on the progress bar will represent 2 x 3600 / 1200 = 6 seconds or 180 frames, assuming a display rate of 30 frames per second (fps). In addition to this fundamental limitation, it is necessary to take into account the size of the user's finger and the motion of the finger on the touch display which is by nature inaccurate. The longer the video, the more difficult it will be for the user to move the cursor to a desired new time-index with precision.

A known method to overcome these limitations is to apply a scaling factor, which changes the sensitivity of the cursor based on the vertical position of the finger on the touch-display. In that case, the new time index will be calculated from the position of the cursor as follows, where v is the vertical position factor:

$$t = \frac{D \times p}{v \times L} \qquad (2)$$

This solution is described in Hurst et al. (Wolfgang Hürst and Philipp Jarvers, "Interactive, Dynamic Video Browsing with the Zoomslider Interface", IEEE 2005 International Conference on Multimedia and Expo (ICME 2005), July 6-8, 2005 in Amsterdam, The Netherlands).

A disadvantage of this solution is that, while moving vertically across the screen, the hand of the user will partially hide the displayed video. This impedes precise navigation because it is difficult to see the frame that the user is about to select. The two-dimensional interaction is also more complex than a simple one-dimensional progress bar. It may be difficult to explain to the user how to control navigation in this way and it may be difficult for the user to understand the process and implement it, in terms of eye-hand coordination. For example, if the user's finger accidentally deviates in a vertical direction, while dragging the cursor, it will have an unintended effect on the speed at which the player navigates through the video.

EP2530677A2 describes a touch screen control method for controlling a playback of multimedia content using a timeline-based interface which includes detecting a selection at a specific location on the timeline; and selectively zoom-displaying an area around the location where the selection is detected the position on the timeline where the event trigger has occurred.

US2002/0012526A1 describes a digital video reproduction method, a digital video reproducing (playing) apparatus and a digital video recording and reproducing (playing) apparatus that allows a spectator to easily and precisely shift (jump) the playing position to a scene of his choice an then start playing from a desired scene. According to such digital video reproduction method, digital video reproducing apparatus and digital video recording and reproducing apparatus, a time bar corresponding to the timeline for the video contents is displayed on the screen. Then, an icon showing the starting position of the event scene that is peculiar to the motion picture is displayed. Upon operating a remote controller, the spectator selects an icon of his choice by moving a cursor to the icon, so that the reproduction of image can be started from the starting position of the event scene corresponding to the selected icon.

GB2344453A describes a video editing system in which source-clips 1,2,3,4 are added to a composed video sequence by addition to a curved time liner 341-342 which displays the entire temporal arrangement of the programme elements. Editing is carried out in a region 31 of high temporal resolution for maximum accuracy.

EP2466279A1 describes systems and methods to visualize measuring and dosing operations. In various embodiments, a computer user interface including a gauge bar, a progress bar, and a target value in combination with a weighing device may be used to measure and dose elements. In one embodiment the method ensures precise and fast dosing when weighing an element. In various embodiments, configuring a mapping function allows numerous combinations of a speed of progress of a progress bar when weighing an element. A progress bar, in combination with acceptable weight values, such as a target value, a primary minimum value, and a primary maximum value allows for color representation when a progress bar enters and exits acceptable weight values. Configuring a set or a plurality set of secondary minimum and maximum values is possible for additional acceptable weight values.

US2009/0282362 discloses the use of 2 time bars, one zoomed in compared to the other. By manipulating the cursor on the expanded timeline, the corresponding slider position in the non-expanded timeline is updated.

According to a first aspect of the invention there is provided the method of claim 1.

The present inventors have recognised that there is a need for precise navigation in media items, while avoiding the problems of two-dimensional user input, mentioned above. According to embodiments of the present disclosure, the nonlinear transfer function provides non-uniform sensitivity (non-uniform precision) to movements by the user, while using only one-dimensional inputs. The sensitivity/precision is non-uniform, in that identical movements at different parts of the line or curve will result in steps of different size within the media item. The control of navigation is one-dimensional in the sense that deviations in other directions do not affect the navigation.

Preferably a straight line is defined to control the navigation, similar to a conventional progress bar. However, any curve (straight or not) can be used. The curve is single-dimensional in the sense that it is possible to characterise position along the curve with a single measurement.

The media item may be a media item that is being played or displayed to the user, such as a video sequence, audio clip, or a document that is larger than the size of the display upon which it is being viewed. In general, it is not possible (or not appropriate) to display the entire media item to the user instantaneously - for example because it has a temporal dimension (in the case of audio or video) or is too large for a display screen (in the case of a document).

A linear mapping is one in which the elements of the sequence are associated with the positions on the line or curve by a constant of proportionality. For example, for a video with 1000 frames, and a line or curve having 100 equally spaced positions, the constant of proportionality would be 10. Position 51/100 would be associated with frame 510/1000. Each increment in position would correspond to an increment of 10 frames in the video sequence. In other words, in a linear mapping, all equally-spaced positions on the line or curve are associated with elements that are equally-spaced, in the sequence.

Embodiments of the present disclosure use a nonlinear mapping, wherein unique positions on the line or curve are associated uniquely with respective elements in the sequence, but equally-spaced positions on the line or curve are mapped to elements that are unequally-spaced. Thus, there is no single constant of proportionality that associates elements with positions. Using the example mentioned above, position 51/100 may be associated with frame 510; and position 52/100 may be associated with frame 520; but position 53/100 may be associated with frame 550. Thus, in one case, an increment of one position-unit would correspond to an increment of 10 frames, but in another case, an increment of one position-unit would correspond to an increment of 30 frames.

The plurality of positions along the line or curve are preferably uniformly spaced apart (in physical distance). The indices of the elements that are associated with the uniformly spaced positions are preferably non-uniformly spaced.

Note that, in the present context, a "one to one" mapping means that no two positions along the line or curve are associated with the same element of the media item; and no two elements of the media item are associated with the same position along the line or curve.

The method may further comprise: defining a current position along the line or curve that represents the current element of the media item, wherein the transfer function is defined so that, near to the current position, an increment in the user-selected position is associated with a small increment in the element of the sequence; and far from the current position, an identical increment in the user-selected position is associated with a larger increment in the element of the sequence.

That is, the transfer function, which maps positions to elements, has a shallow slope in a first region close to the current position and a steeper slope in a second region further from the current position. The transfer function preferably becomes progressively steeper - that is, progressively more sensitive to changes in the user-selected position - the further the selected position deviates from the current position.

This allows the user to navigate with fine control (small step sizes) among elements that are close to the current element of the sequence, and to navigate with coarser control (larger step sizes) among elements that are further from the current element of the sequence. With this approach, a user can select any part of the media item with arbitrary precision, by taking an iterative approach. For example, the user can take a "large" step, to get closer to the vicinity of a desired frame of a video. Once in the right vicinity, the user is able to take "smaller" steps, to achieve finer precision in finding the desired frame.

The current position along the line or curve, which represents the current element of the media item, is defined to be linearly proportional to the index of the element in the sequence.

The transfer function may be defined piecewise by one or more algebraic expressions.

The inventors have found this to be one advantageous form of transfer function. It has the benefit of great flexibility in choosing the shape of the transfer function, yet allows relatively simple calculation of the index of the element to be navigated to.

Optionally, the or each algebraic expression may be a polynomial expression. Thus, the transfer function may be piecewise-polynomial.

The transfer function may be of the form defined in equation (3) or equation (4), herein.

Equation (3) is one particularly advantageous piecewise polynomial transfer function. Equation (4) is another particularly advantageous piecewise function defined by two algebraic expressions. Both of these functions are defined in two parts, which meet at the current position and element: a first expression defines the transfer function from the start of the media item up to the current element; and a second expression defines the transfer function from the current element until the end of the media item.

The line or curve may be defined on a graphical display and the input operation by the user may comprise selecting a position on the graphical display.

The selection may comprise, for example, touching the position on a touch-screen, or clicking on the position using a mouse or other pointing device. It may also comprise dragging an indicator or pointer to the position.

Preferably, the line or curve is depicted on the display.

This allows the user to see easily how to control the navigation, improving eye-hand coordination.

The current element within the media item is preferably indicated on the display by a cursor, pointer, or slider at a representative position on the line or curve.

The representative position along the line or curve, which represents the current element of the media item, is defined to be linearly proportional to the index of the current element in the sequence. Thus, before the user begins interactive navigation, the line or curve (for example, progress bar) indicates the index in the conventional linear fashion. This may make it easier for the user to interpret the relative index within the media item (i.e. where in the media item the current index is).

The cursor, pointer, or slider is a graphical element drawn on the display, with which the user can interact. In other words, the cursor, pointer, or slider is part of a graphical user interface which enables the user to control the navigation within the media item.

The input operation may comprise the user dragging the cursor, pointer or slider.

The user may find this a familiar and easily-understood means of navigation, because it is similar to the known linear-scrubbing approach.

In one example not part of the invention, as the user drags the cursor, the cursor may move to the position to which it is dragged. In other words, the user may indicate the position that the user wishes to select by a dragging action and the cursor is drawn at the position that the user selects.

In one embodiment, the cursor might not follow the dragging action. For instance, the cursor might not move to the same extent that the user indicates via the dragging action. In particular, the user may select a position on the line or curve by a dragging action, but, instead of being displayed at the position selected, the cursor may be displayed at a representative position that corresponds to the determined index within the media item, wherein the representative position is defined according to a linear transfer function.

The method further comprises calculating a new position along the line or curve for the cursor; pointer, or slider, which is representative of the index of the determined element within the sequence; and displaying the cursor, pointer, or slider at the new position, wherein the new position is calculated such that it is linearly proportional to the index of the determined element within the sequence.

In other words, compared with the total length of the line or curve, the new position of the cursor, pointer, or slider is proportional to the index of the element that was navigated to, compared with the total length of the sequence. Thus, if the element that is navigated to is two thirds of the way through the sequence, the new position of the cursor, pointer, or slider will be two thirds of the way along the total length of the line or curve. In this way, once the user has finished interactive navigation within the media item, the new index within the media item is indicated graphically in a linear way again.

Optionally, the media item is a document; the elements are pages, sections, or lines of the document; and the step of navigating within the media item comprises displaying the page, section, or line of the document whose index within the document corresponds to the user-selected position, according to the transfer function.

The document may contain text or still images etc. The line or curve may comprise a scroll bar that is displayed at one side of the document.

Optionally, the media item is a video; the elements are frames of the video; and the step of navigating within the media item comprises displaying the frame whose temporal index within the video corresponds to the user-selected position, according to the transfer function.

In this case, the line or curve used for navigation is preferably substantially horizontal, in relation to the orientation of the displayed video.

Optionally, the media item is an audio clip; the elements are frames or samples of the audio clip; and the step of navigating within the media item comprises playing the audio, starting with the frame or sample whose temporal index within the audio clip corresponds to the user-selected position, according to the transfer function.

The line or curve may be a progress bar and the navigation may comprise skipping forwards or backwards within the audio clip or video in response to the user dragging a slider along the progress bar.

The progress bar preferably defines a horizontal line.

Also provided is a computer program comprising computer program code means adapted to control a computer to perform all the steps of any preceding claim if said program is run on the computer, preferably embodied on a non-transitory computer-readable medium as defined in claim 10.

There may also be provided a media player apparatus, for playing or displaying a media item comprising a sequence of elements, as defined in claim 11.

The apparatus may be a portable device, in particular a personal portable electronic device, such as a portable media player, mobile phone or tablet.

The display screen is preferably a touch-screen wherein the touch-screen also provides the input device.

The invention will now be described by way of example with reference to the accompanying drawings, in which:

Fig. 1 shows an exemplary portable device within which an embodiment of the invention may be implemented;
Fig. 2 illustrates a transfer function for a linear navigation method, according to the prior art;
Fig. 3 illustrates a transfer function for a nonlinear navigation method, according to an embodiment of the present invention;
Fig. 4 illustrates how the user-controlled navigation is implemented, using the nonlinear transfer function;
Fig. 5 shows a set of exemplary transfer functions, suitable for embodiments of the invention;
Fig. 6 is a flowchart illustrating the user interaction in greater detail;
Fig. 7 is a flowchart of a method according to an embodiment of the invention;
Fig. 8 is a block diagram of a portable device according to an embodiment;
Fig. 9 shows an alternative exemplary transfer function, suitable for an embodiment of the invention;
Fig. 10 shows a first piecewise linear transfer function, suitable for an embodiment; and
Fig. 11 shows a second piecewise linear transfer function, suitable for an embodiment.

The invention will be explained by reference the example of navigating in a video sequence. However, as will be apparent to those skilled in the art, the media item is not necessarily a video sequence in all cases.

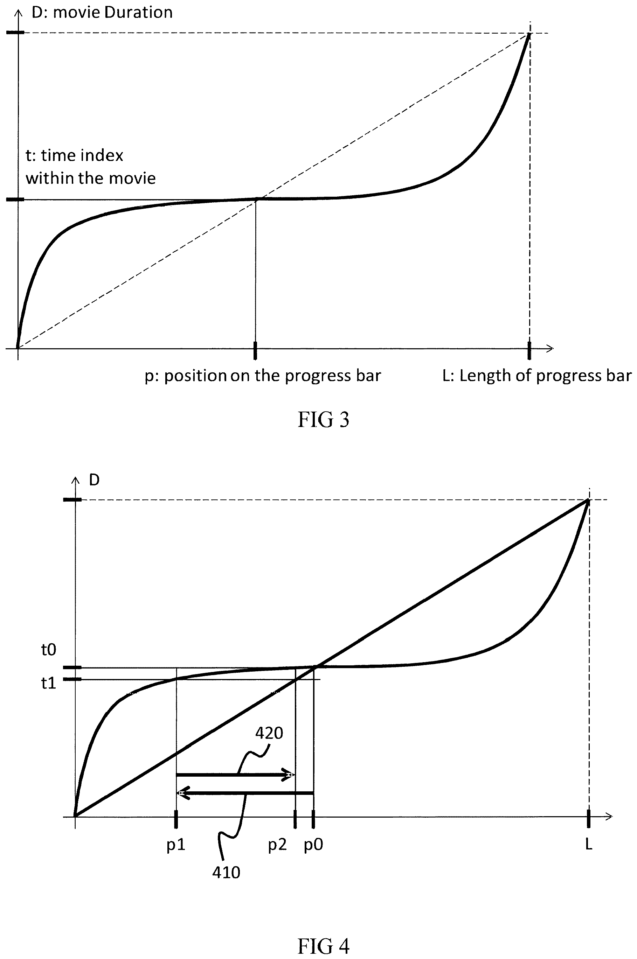

Fig. 3 illustrates a nonlinear transfer function, for mapping the position of a cursor to a time index within the video, according to an embodiment of the invention. The dashed line indicates the conventional linear transfer function, and the solid line indicates the nonlinear transfer function of the embodiment. The transfer function has a shallow slope near to the current position, p, which increases at positions further from the current position. This means that the user will have very precise/fine control of the navigation, near to the currently displayed time index, t, of the video. A unit change in position (for example, one pixel on the touch-screen) will result in a small change in the time index in the video. Far from the current time index, t, the same unit change in position along the progress bar will cause a larger change in the time index. The nonlinear transfer function starts and ends at the same positions and time indices as the conventional linear transfer function - that is, the left-most end of the progress bar maps to the start of the video and the right-most end of the bar maps to the end of the video. This means that, near to the currently displayed position and time index, the nonlinear transfer function provides finer control than the linear transfer function. Meanwhile, far from the currently displayed position and time index, the nonlinear transfer function provides coarser control than the linear transfer function.

This can enable accurate navigation around the current cursor position and a faster moving to the desired new time position when far from the current cursor position.

In one embodiment, the user selects the new cursor position by touching (tapping) a desired position along the progress bar. In another embodiment, the user selects the new cursor position by touching the cursor and dragging it to the new position.

In the first case, the user interaction is completed immediately after the user taps on the new desired position. In the second case, the user interaction is completed after the user releases the cursor (that is, removes his/her finger from the touch-screen, to end the dragging operation).

In both cases, the cursor position will be updated in order to reflect the time index in a linear way again. In other words, the portable device automatically moves the cursor to an updated position determined according to the linear transfer function. This is done because the linear transfer function offers an easy way for the user to interpret the relative amount of time elapsed and time remaining in the video. The effect is that the position of the cursor will "snap" back when the cursor is released, from the position that the user selected to the position determined according to the linear transfer function. The distance of the "snap-back" is determined by the shape of the nonlinear transfer function - in particular, it is the horizontal distance between the nonlinear transfer function and the linear transfer function, at the point on the nonlinear transfer function that has been selected by the user.

The nonlinear transfer function will now be described in greater detail. The following definitions will be helpful:

- Let $p_0$ be the current position of the cursor when scrubbing starts;
- Let $p_1$ be the position of the cursor when the user finishes scrubbing (that is, dragging the cursor) - this is the position before the cursor is released;
- Let $p_2$ be the position of the cursor after the cursor is released;
- Let $p$ be the position of the cursor during scrubbing;
- Let $D$ be the duration of the movie;
- Let $L$ be the length of the progress bar in pixels;
- Let $t_0$ be the current time index within the movie when scrubbing starts;
- Let $t_1$ be the time index within the movie that is determined when scrubbing ends - this is the time index to which the player navigates, in response to the user input; and
- Let $t$ be the time index within the movie.

Each position is measured as a number of pixels. In the present embodiment, the progress bar defines a straight line. Each time index is measured in seconds. The time indices can equivalently be measured in frames.

In general, the transfer function can be defined in a variety of ways and can assume a variety of shapes. Preferably, the transfer function fulfils the following conditions

At $p = 0$, $t=0$. This ensures that the start of the video corresponds to the start of the progress bar;

At $p = L$, $t= D$. This means that the end of the video corresponds to the end of the progress bar;

At $p=p_0$, $t=p_0 . D/L$. This means that the nonlinear transfer function intersects the linear transfer function at the current time and position. Therefore, if the user selects the current position of the cursor, there will be no change in the time index within the video.

$dt/dp$ at $p_0 = 0$. When the transfer function is defined by an algebraic expression, the first derivative of the transfer function with respect to position is zero at the current (initial) position of the cursor. However, although the derivative of the algebraic function is zero, the discrete mapping remains one-to-one. That is, each discrete position (e.g. pixel) on the progress bar is associated with a different time-index within the video.

A more general version of the last condition is to require only that $0 \leq dt/dp < D/L$, at $p_0 = 0$. In other words, at the current position, the slope of the transfer function is greater than or equal to zero and less than the slope of the linear transfer function.

According to the present embodiment, the transfer function is defined as a piecewise polynomial function. In particular, a first polynomial function is defined between 0 and $p_0$, and a second is defined between $p_0$ and $L$. The functions used are as follows:

$$t(p) = \frac{D}{L} \cdot \left[ \frac{(p-p_0)^n}{(-p_0)^{n-1}} + p_0 \right] \; if \; p < p0$$

$$t(p) = \frac{D}{L} \cdot \left[ \frac{(p-p_0)^n}{(L-p_0)^{n-1}} + p_0 \right] \; if \; p \geq p0$$

(3)

At the end of scrubbing (before the cursor is released), the new time index is determined as $t1 = t(p1)$. After the cursor is released, an updated cursor position is computed according to the linear calculation: $p2 = (L.t1/D)$. This is illustrated in Fig. 4. The arrow 410 indicates the distance that the user drags the cursor, from its starting position $p0$ to the new selected position $p1$. The video player will navigate to the corresponding time index $t1$. The arrow 420 indicates the "snap-back" operation, wherein the video player updates the displayed position of the cursor to $p2$, according to the linear transfer function.

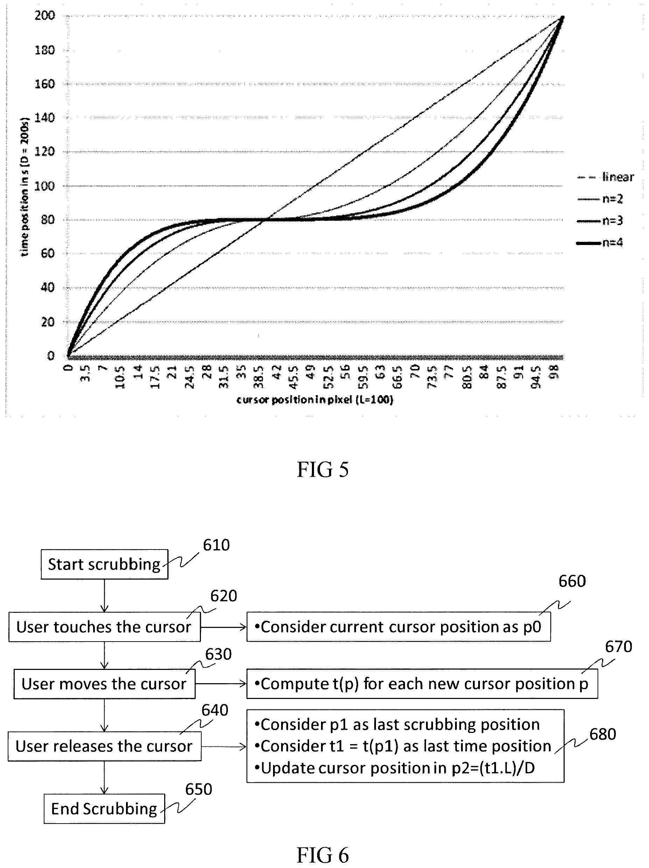

The value of the exponent, $n$, in the polynomial function is greater than or equal to 2. The value of $n$ affects the slope around the initial cursor position $p0$. A higher value will make the precision more accurate around the initial cursor position $p0$. Meanwhile, the precision far from the initial cursor position will be reduced, with higher values of $n$. Fig. 5 illustrates a set of piecewise polynomial functions defined using equation (3), for $n=2$, $n=3$, and $n=4$.

The algebraic expression defining the transfer function will be evaluated only at a discrete set of positions (for example, the pixel-positions along the progress bar). In general, the value of the function at these positions will be a. real number, not necessarily an integer. This real number is then rounded or truncated to the nearest integer, in order to determine the element of the video that should be navigated to. In principle, it is possible that two pixel-positions could map to the same frame (that is, time-index) within the video, by using this method. However, the value of $n$ can be chosen so that, for any video and progress bar of arbitrary lengths, each position on the progress bar maps to a distinct index within the video. In particular, there is no dead-zone at $p=p0$. That is, the value of $n$ can be chosen so that $t(p0) - t(p0-1) = 1$ frame or $t(p0+1)-t(p0) = 1$ frame (assuming $p0$ is described as a discrete pixel position value and $t(p)$ represents the discrete time index within the video, expressed in frame numbers).

The user interaction will be explained in greater detail with reference to Fig. 6. The navigation (scrubbing) within the video begins in step 610. In step 620, the user touches the cursor 40. At this stage, the value of $p0$ is initialised with the current (that is initial) position of the cursor (step 660). The user then moves (drags) the cursor along the progress bar 30 (step 630). For each new cursor position $p$, the corresponding time index $t(p)$ is calculated in step 670, using equation (3). If the video player application has enough processing power, it may decode and display some or all of the frames traversed as the user moves the cursor 40. This allows the user to see the effect of moving the cursor instantaneously and makes it easier to find a desired time index in the video. When the user finds the desired time index, he/she releases the cursor (step 640). At this stage, $p1$ is set to the final position $p$ of the cursor when it was released. The new time index $t1$ is updated with $t1=t(p1)$, using equation (3). Lastly, the cursor position is updated according to the linear equation $p2 = (t1.L)/D$. These three operations are shown in step 680 in Fig. 6. The navigation operation (scrubbing) ends at step 650.

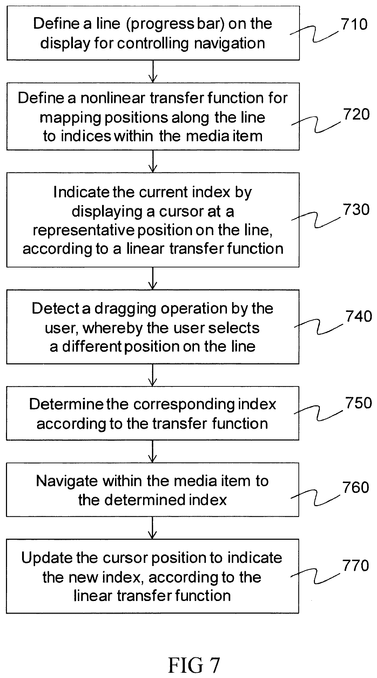

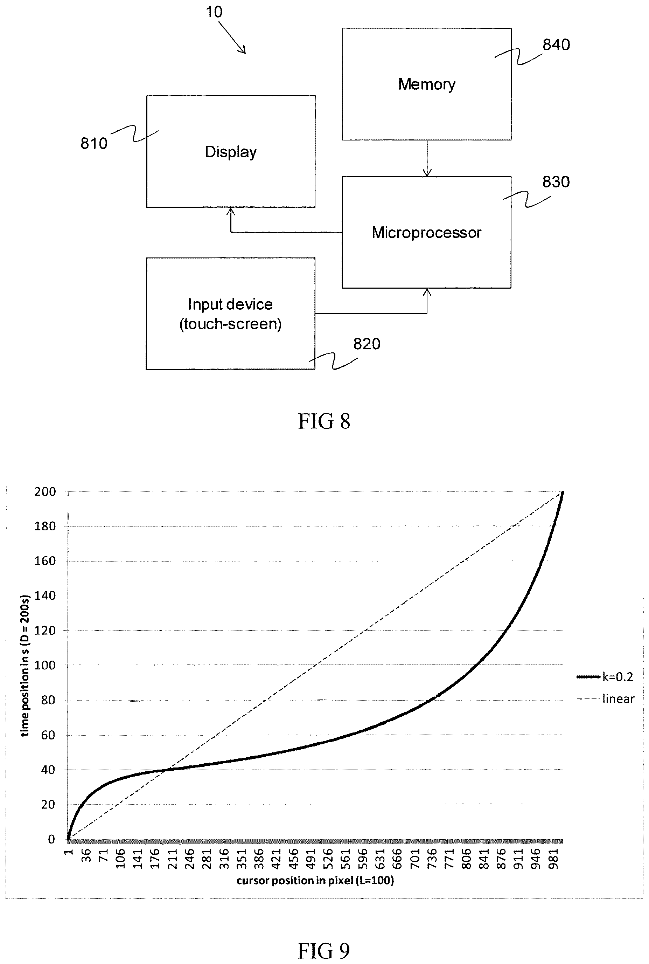

A method and apparatus according to an embodiment of the invention will now be described, with reference to Figs. 7 and 8. Fig. 7 is a flow chart illustrating a method performed by the apparatus, which is shown in the block diagram of Fig. 8. In this example, the apparatus is the same portable device 10 shown in Fig. 1. In the diagram of Fig. 8, the display 810 and touch-screen 820 are shown as separate blocks. In practice, these blocks are implemented by a single piece of hardware - namely, touch-sensitive display screen 20. The apparatus also comprises a microprocessor 830 and memory 840. The input device (touch-screen) 820 is connected to an input of the microprocessor. The display 810 is connected to an output of the microprocessor. The memory 840 is also coupled to the microprocessor 830. In use, the video sequence is stored in the memory 840. It is retrieved from the memory 840 by the microprocessor 830, decoded by the microprocessor, and displayed on the display 810. The user controls navigation within the video by interacting with the touch-screen 820.

The method according to the embodiment proceeds as follows (referring to Fig. 7). In step 710, the processor 830 defines a line on the display for controlling navigation. This line is drawn on the display 810 in the form of progress bar 30. In step 720, the processor defines a non-linear transfer function for mapping positions along the progress bar 30 to temporal indices within the video sequence, during user-controlled navigation. The transfer function is defined according to equation (3) above. The processor also indicates the current index in the video sequence by displaying a cursor 40 at a representative position on the progress bar 30 (step 730). This representative position is determined according to the linear transfer function illustrated in Fig. 2.

A navigation operation (scrubbing) then begins (step 610). In step 740, the microprocessor 830 detects a dragging operation by the user, by which the user drags the cursor 40 to select a different position on the progress bar 30. Referring also to Fig. 6, the processor 830 detects the user touching the cursor (step 620), moving the cursor (step 630), and releasing the cursor (step 640). While the user is interacting with the cursor, the microprocessor 830 monitors the position, p, of the cursor 40 and computes a time index, t(p), for each new cursor position, using the non-linear transfer function (step 670). If the processor 830 is sufficiently powerful, it will decode frames of the video and display them on the screen 810 while the user is moving the cursor 40. If the processor is not powerful enough, this step may be skipped. When the user releases the cursor (step 640) the processor 830 determines the corresponding time index, t1=t(p1), in the video sequence according to the non-linear transfer function (step 750). In step 760, the processor 830 navigates within the video sequence to the determined index, and decodes and displays the corresponding frame of the video. Finally, in step 770, the processor repositions the cursor 40 to indicate the newly determined index t1, using the linear transfer function. The system is then ready for the next navigation operation by the user, starting with the new cursor position, p2, and time index, t1.

While the invention has been illustrated and described in detail in the drawings and foregoing description, such illustration and description are to be considered illustrative or exemplary and not restrictive; the invention is not limited to the disclosed embodiments.

It is not essential that the transfer function is piecewise polynomial. Another example of an advantageous transfer function defined by an algebraic expression is as follows:

$$t(p) = \left[ \frac{k \cdot (p - p_0)}{(k + 1) \cdot p_0 + (p - p_0)} + 1 \right] \cdot \frac{D}{L} \cdot p_0 \ if \ p < p_0$$

$$t(p) = \left[ \frac{k \cdot (p - p_0)}{(k + 1) \cdot (L - p_0) - (p - p_0)} - 1 \right] \cdot \left( D - \frac{D}{L} \cdot p_0 \right) + D \ if \ p \geq p_0$$

$$(4)$$

For this transfer function, the shape is controlled by the parameter k, which is a real number greater than zero. For very large values of k, the transfer function becomes increasingly similar to the linear transfer function. The parameter k can be chosen to ensure that the discrete mapping defined by the transfer function remains one-to-one - that is, there is no "dead-zone" where two positions map to the same element-index in the media item. In particular, the value of k can be chosen so that $t(p0) - t(p0-1) = 1$ frame or $t(p0+1)-t(p0) = 1$ frame (assuming p0 is described as a discrete pixel position value and t(p) represents the discrete time index within the video, expressed in frame numbers). An example of this type of transfer function with k=0.2 is shown in Fig. 9.

Another suitable kind of transfer function could be a piecewise linear transfer function. Such a transfer function should preferably have at least two pieces: a first portion, in the neighbourhood of the current position, which is defined by a line of a first slope; and a second portion further away from the current position, which is defined by a line of a second slope. The second slope is greater than the first slope.

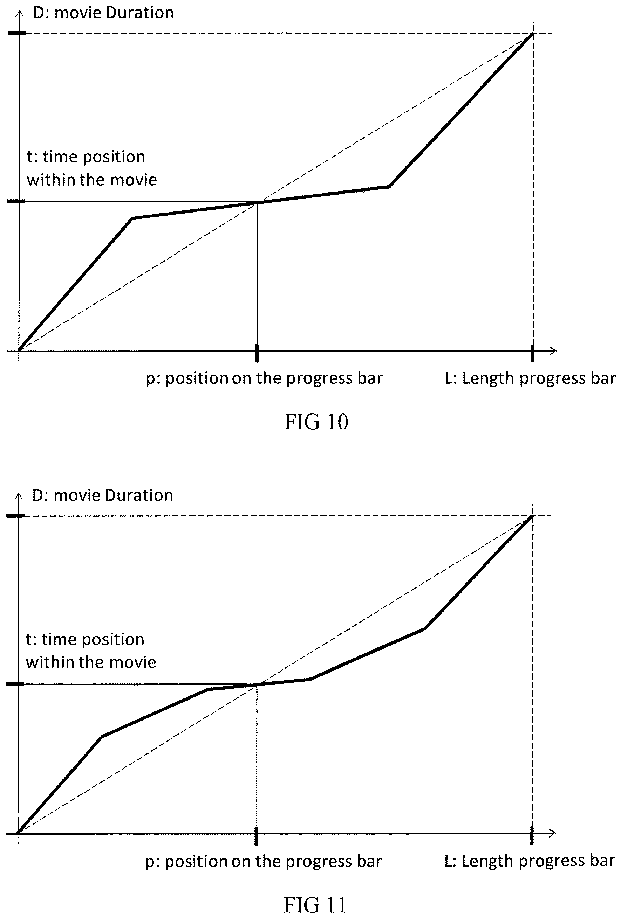

Figs. 10 and 11 show examples of piecewise linear transfer functions. In Fig. 10, the transfer function consists of three linear pieces. In Fig. 11, the transfer function consists of five linear pieces. The slope of the pieces becomes successively greater with increasing distance from the current position, p0.

Transfer functions according to embodiments of the invention are preferably free of substantial discontinuities. In particular, for transfer functions defined piecewise by algebraic expressions, adjacent pieces of the function preferably take a common value at the boundary between the pieces. Thus, for example, the end of each linear piece of a piecewise linear transfer function preferably coincides with the start of the neighbouring piece. This is true of the functions pictured in Figs. 10 and 11.

In the examples described previously above, the cursor on the progress bar moved with the user input position, while the user was dragging it. The index within the media item was updated according to the non-linear transfer function while this was happening. Then, when the user released the cursor, it snapped back to a position determined according to the new index and the linear transfer function. In the embodiments of the invention, the cursor does not follow the user input position (that is, the position indicated by the finger or the mouse) while the user input is occurring.

In one embodiment, an "elastic" cursor can be implemented. In this example, while the user is providing input by a dragging action, the index in the media item is determined according to the nonlinear transfer function, depending on the user input position. However, the cursor does not follow the dragging action completely. Instead, the cursor is drawn at a position that is always determined by the index in the media item using the linear transfer function. In other words, in this embodiment, the cursor is always drawn (in real-time) at what was the "snap-back position" p2 of the earlier-described embodiment. Obviously, this avoids the need for a separate "snap-back" operation after dragging has finished, since the cursor is already displayed at the "snapped-back" position. Thus, step 680 in Fig. 6 is no longer necessary when the user releases the cursor. Likewise, the step 770 in Fig. 7 is not a separate final step - instead this step is performed on an on-going (real-time) basis, while the user is dragging the cursor.

In the examples above, the media document was a video sequence. However, the media document could also be an audio clip or a document. In the case of an audio clip, the navigation can be controlled using a progress bar and cursor as described above. In the case of a document, the control may be via a scroll bar (which those skilled in the art will understand to be similar in function).

In the examples above, the user-input controlling the navigation was captured using a touch sensitive screen as the input device. However, the same interaction can be captured with other input devices, including but not limited to a mouse or other pointing device.

The navigation functionality provided by embodiments of the present invention may be useful in a variety of applications. The example given above was playback of a video sequence. However, the precise control offered according to embodiments of the invention will also be particularly useful when editing a video, or an audio clip. In this case of playback, the aim is to begin playing the video or audio from a desired index. In the case of editing, the aim may be to cut the video or audio at a desired index.

In the examples above, the nonlinear transfer function was defined by a mathematical formula - in particular an algebraic function. This provides an easy way to define the transfer function, and allows the function to be evaluated easily at arbitrary values of position (the input variable). However, it is not essential that the transfer function is implemented in this way, using an analytic expression. For example, the transfer function could be stored in the memory in the form of a look-up table (LUT). This would avoid the need to evaluate the transfer function by performing calculations during the navigation operation and would also allow the transfer function to have an arbitrary shape; however, it would also be likely to increase memory requirements, due to the need to store the LUT.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for user-controlled navigation within a media item comprising a sequence of elements, the method comprising:

   defining (710) a line or curve (30) on a graphical display (20) for controlling the navigation;
   defining (720) a transfer function (t(p)) that associates a plurality of positions (p) along the line or curve (30) with respective elements of the sequence, the transfer function (t(p)) defining a nonlinear one-to-one mapping between the positions (p) along the line or curve (30) and the elements of the sequence;
   detecting (740) an input operation by the user, wherein the input operation selects one (p1) of the plurality of positions (p);
   determining (750) the element of the sequence that corresponds to the user-selected position (p1), according to the defined transfer function (t(p)); and
   navigating (760) within the media item to the determined element,
   wherein the current element within the media item is indicated by a cursor (40) at a representative position (p) on the line or curve (30), and the input operation comprises the user dragging the cursor (40) along the line or curve (30) to the user-selected position (p1), and **characterized in that** : the method further comprises displaying (730) the cursor (40) throughout the dragging operation at a representative position (p) which is linearly proportional to the index of the current element in the sequence.

2. The method of claim 1, further comprising:

defining (660) a current position (p0) along the line or curve (30) that represents the current element of the media item,
wherein the transfer function (t(p)) is defined so that,

at a first distance along the line or curve (30) from the current position (p0), an increment in the user-selected position (p1) is associated with a first increment in the element of the sequence; and
at a second distance along the line or curve (30) from the current position (p0), an identical increment in the user-selected position (p1) is associated with a second increment in the element of the sequence,

wherein the second distance is greater than the first distance and the second increment is greater than the first increment.

3. The method of claim 1 or claim 2, wherein the transfer function (t(p)) is defined piecewise by one or more algebraic expressions.

4. The method of claim 3, wherein the transfer function (t(p)) is of the form:

$$t(p) = \frac{D}{L} \cdot \left[ \frac{(p-p_0)^n}{(-p_0)^{n-1}} + p_0 \right] \text{ if } p < p0$$

$$t(p) = \frac{D}{L} \cdot \left[ \frac{(p-p_0)^n}{(L-p_0)^{n-1}} + p_0 \right] \text{ if } p \geq p0$$

where t is the index of the current element within the media item, p is the position of the cursor (40) during the dragging operation, $p_0$ is the position of the cursor (40) before the dragging operation was started, D is the duration of the media item, L is the length of the line or curve (30), and n is the exponent of the polynomial function which is greater than or equal to 2.

5. The method of claim 3, wherein the transfer function (t(p)) is of the form:

$$t(p) = \left[ \frac{k \cdot (p-p_0)}{(k+1) \cdot p_0 + (p-p_0)} + 1 \right] \cdot \frac{D}{L} \cdot p_0 \text{ if } p < p_0$$

$$t(p) = \left[ \frac{k \cdot (p-p_0)}{(k+1) \cdot (L-p_0) - (p-p_0)} - 1 \right] \cdot \left( D - \frac{D}{L} \cdot p_0 \right) + D \text{ if } p \geq p_0$$

where t is the index of the current element within the media item, p is the position of the cursor (40) during the dragging operation, $p_0$ is the position of the cursor (40) before the dragging operation was started, D is the duration of the media item, L is the length of the line or curve (30), and k is a parameter which is a real number greater than zero.

6. The method of any preceding claim, wherein:

the media item is a document;
the elements are pages, sections, or lines of the document; and
the step (760) of navigating within the media item comprises displaying the page, section, or line of the document whose index within the document corresponds to the user-selected position (p1), according to the transfer function (t(p)).

7. The method of any preceding claim, wherein:

the media item is a video;
the elements are frames of the video; and
the step (760) of navigating within the media item comprises displaying the frame whose temporal index (t1) within the video corresponds to the user-selected position (p1), according to the transfer function (t(p)).

8. The method of any preceding claim, wherein:

the media item is an audio clip;

the elements are frames or samples of the audio clip; and

the step (760) of navigating within the media item comprises playing the audio, starting with the frame or sample whose temporal index (t1) within the audio clip corresponds to the user-selected position (p1), according to the transfer function (t(p)).

9. The method of claim 7 or claim 8, wherein the line or curve (30) is a progress bar and the navigation comprises skipping forwards or backwards within the audio clip or video in response to the user dragging a slider (40) along the progress bar (30).

10. A computer program comprising computer program code means adapted to control a physical computing device (10) to perform all the steps of any preceding claim if said program is run on the physical computing device (10), said program preferably embodied on a non-transitory computer-readable medium (840).

11. A media player apparatus (10), for playing or displaying a media item comprising a sequence of elements, the apparatus (10) comprising:

a display screen (810), for displaying to a user a graphical interface for controlling navigation within the media item;
an input device (820), for user input; and
a processor (830), for processing the user input in order to control the navigation, wherein the processor (830) is adapted to:

define (710) a line or curve (30) on the display screen (810) for controlling the navigation;
define (720) a transfer function (t(p)) that associates a plurality of positions (p) along the line or curve (30) with respective elements of the sequence, the transfer function (t(p)) defining a nonlinear one-to-one mapping between the positions (p) along the line or curve (30) and the elements of the sequence;
detect (740), using the input device (820), an input operation by the user, wherein the input operation selects one (p1) of the plurality of positions (p);
determine (750) the element of the sequence that corresponds to the user-selected position (p1), according to the defined transfer function (t(p)); and
navigate (760) within the media item to the determined element,
wherein the current element within the media item is indicated by a cursor (40) at a representative position (p) on the line or curve (30), and the input operation comprises the user dragging the cursor (40) along the line or curve (30) to the user-selected position (p1), and **characterized in that**: the processor (830) is further adapted to display (730) the cursor (40) throughout the dragging operation at a representative position (p) which is linearly proportional to the index of the current element in the sequence.

**Patentansprüche**

1. Verfahren zur anwendergesteuerten Navigation in einem Medienelement, das eine Folge von Bestandteilen umfasst, wobei das Verfahren Folgendes umfasst:

Definieren (710) einer Linie oder einer Kurve (30) auf einer graphischen Anzeigevorrichtung (20) zum Steuern der Navigation;
Definieren (720) einer Übertragungsfunktion (t(p)), die mehrere Positionen (p) entlang der Linie oder der Kurve (30) entsprechenden Bestandteilen der Folge zuordnet, wobei die Übertragungsfunktion (t(p)) eine nichtlineare eindeutige Abbildung zwischen den Positionen (p) entlang der Linie oder der Kurve (30) und den Bestandteilen der Folge definiert;
Detektieren (740) einer Eingabeoperation durch den Anwender, wobei die Eingabeoperation eine (p1) der mehreren Positionen (p) wählt;
Bestimmen (750) des Bestandteils der Folge, der der anwendergewählten Position (p1) entspricht, gemäß der definierten Übertragungsfunktion (t(p)); und
Navigieren (760) mit dem Medienelement zum bestimmten Bestandteil, wobei
der aktuelle Bestandteil im Medienelement durch einen Cursor (40) bei einer repräsentativen Position (p) auf der Linie oder der Kurve (30) angezeigt wird und die Eingabeoperation umfasst, dass der Anwender den Cursor (40) entlang der Linie oder der Kurve (30) zur anwendergewählten Position (p1) zieht,
**dadurch gekennzeichnet, dass**

das Verfahren ferner ein Anzeigen (730) des Cursors (40) im Verlauf der Ziehoperation bei einer repräsentativen Position (p), die zum Index des aktuellen Bestandteils in der Folge linear proportional ist, umfasst.

2. Verfahren nach Anspruch 1, das ferner Folgendes umfasst:

Definieren (660) einer aktuellen Position (p0) entlang der Linie oder der Kurve (30), die den aktuellen Bestandteil des Medienelements repräsentiert, wobei
die Übertragungsfunktion (t(p)) derart definiert ist, dass

bei einer ersten Entfernung entlang der Linie oder der Kurve (30) von der aktuellen Position (p0) ein Zuwachs zur anwendergewählten Position (p1) einem ersten Zuwachs im Bestandteil der Folge zugeordnet ist; und
bei einer zweiten Entfernung entlang der Linie oder der Kurve (30) von der aktuellen Position (p0) ein identischer Zuwachse der anwendergewählten Position (p1) einem zweiten Zuwachs im Bestandteil der Folge zugeordnet ist, wobei

die zweite Entfernung größer als die erste Entfernung ist und der zweite Zuwachse größer als der erste Zuwachs ist.

3. Verfahren nach Anspruch 1 oder Anspruch 2, wobei die Übertragungsfunktion (t(p)) durch einen oder mehrere algebraische Ausdrücke stückweise definiert ist.

4. Verfahren nach Anspruch 3, wobei die Übertragungsfunktion (t(p)) die folgende Form aufweist:

$$t\left(p\right) = \frac{D}{L} \cdot \left[\frac{\left(p - p_0\right)^n}{\left(-p_0\right)^{n-1}} + p_0\right],$$

wenn $p < p0$,

$$t\left(p\right) = \frac{D}{L} \cdot \left[\frac{\left(p - p_0\right)^n}{\left(L - p_0\right)^{n-1}} + p_0\right],$$

wenn $p \geq p0$, wobei
$t$ der Index des aktuellen Bestandteils im Medienelement ist, $p$ die Position des Cursors (40) während der Ziehoperation ist, $p_0$ die Position des Cursors (40), bevor die Ziehoperation gestartet wurde, ist, $D$ die Dauer des Medienelements ist, $L$ die Länge der Linie oder der Kurve (30) ist und $n$ der Exponent der Polynomfunktion ist, der größer oder gleich 2 ist.

5. Verfahren nach Anspruch 3, wobei die Übertragungsfunktion (t(p)) die folgende Form aufweist:

$$t\left(p\right) = \left[\frac{k \cdot \left(p - p_0\right)}{\left(k + 1\right) \cdot p_0 + \left(p - p_0\right)} + 1\right] \cdot \frac{D}{L} \cdot p_0,$$

wenn $p < p_0$,

$$t\left(p\right) = \left[\frac{k \cdot \left(p - p_0\right)}{\left(k + 1\right) \cdot \left(L - p_0\right) - \left(p - p_0\right)} - 1\right] \cdot \left(D - \frac{D}{L} \cdot p_0\right) + D,$$

wenn $p \geq p_0$, wobei
$t$ der Index des aktuellen Bestandteils im Medienelement ist, $p$ die Position des Cursors (40) während der Ziehoperation ist, $p_0$ die Position des Cursors (40), bevor die Ziehoperation gestartet wurde, ist, $D$ die Dauer des Medienelements ist, *L* die Länge der Linie oder der Kurve (30) ist und *k* ein Parameter ist, der eine reelle Zahl größer als null ist.

**6.** Verfahren nach einem vorhergehenden Anspruch, wobei das Medienelement ein Dokument ist;
die Bestandteile Seiten, Abschnitte oder Zeilen des Dokuments sind; und
der Schritt (760) des Navigierens im Medienelement ein Anzeigen der Seite, des Abschnitts oder der Zeile des Dokuments, deren bzw. dessen Index im Dokument der anwendergewählten Position (p1) entspricht, gemäß der Übertragungsfunktion (t(p)) umfasst.

**7.** Verfahren nach einem vorhergehenden Anspruch, wobei das Medienelement ein Video ist;
die Elemente Rahmen des Videos sind; und
der Schritt (760) des Navigierens im Medienelement ein Anzeigen des Rahmens, dessen zeitlicher Index (t1) im Video der anwendergewählten Position (p1) entspricht, gemäß der Übertragungsfunktion (t(p)) umfasst.

**8.** Verfahren nach einem vorhergehenden Anspruch, wobei das Medienelement ein Audioausschnitt ist;
die Elemente Rahmen oder Abtastwerte des Audioausschnitts sind; und
der Schritt (760) des Navigierens im Medienelement ein Abspielen des Audio, beginnend mit dem Rahmen oder dem Abtastwert, dessen zeitlicher Index (t1) im Audioausschnitt der anwendergewählten Position (p1) entspricht, gemäß der Übertragungsfunktion (t(p)) umfasst.

**9.** Verfahren nach Anspruch 7 oder Anspruch 8, wobei die Linie oder die Kurve (30) ein Fortschrittsbalken ist und die Navigation ein Vorwärtsspringen oder ein Rückwärtsspringen im Audioausschnitt oder im Video in Reaktion darauf, dass der Anwender einen Schieberegler (40) entlang des Fortschrittsbalkens (30) zieht, umfasst.

**10.** Computerprogramm, das Computerprogrammcodemittel umfasst, die ausgelegt sind, eine physische Rechenvorrichtung (10) zu steuern, alle Schritte eines vorhergehenden Anspruchs durchzuführen, wenn das Programm in der physischen Rechenvorrichtung (10) ausgeführt wird, wobei das Programm bevorzugt in einem nichttransitorischen computerlesbaren Medium (840) verkörpert ist.

**11.** Medienabspielvorrichtung (10) zum Abspielen oder zum Anzeigen eines Medienelements, das eine Folge von Bestandteilen umfasst, wobei die Vorrichtung (10) Folgendes umfasst:

einen Anzeigebildschirm (810) zum Anzeigen zu einem Anwender einer graphischen Schnittstelle zum Steuern einer Navigation im Medienelement;
eine Eingabevorrichtung (820) zur Anwendereingabe und
einen Prozessor (830) zum Verarbeiten der Anwendereingabe, um die Navigation zu steuern, wobei der Prozessor (830) ausgelegt ist zum
Definieren (710) einer Linie oder einer Kurve (30) auf dem Anzeigebildschirm (810) zum Steuern der Navigation;
Definieren (720) einer Übertragungsfunktion (t(p)), die mehrere Positionen (p) entlang der Linie oder der Kurve (30) entsprechenden Bestandteilen der Folge zuordnet, wobei die Übertragungsfunktion (t(p)) eine nichtlineare eindeutige Abbildung zwischen den Positionen (p) entlang der Linie oder der Kurve (30) und den Bestandteilen der Folge definiert;
Detektieren (740) unter Verwendung der Eingabevorrichtung (820) einer Eingabeoperation durch den Anwender, wobei die Eingabeoperation eine (p1) der mehreren Positionen (p) wählt;
Bestimmen (750) des Bestandteils der Folge, der der anwendergewählten Position (p1) entspricht, gemäß der definierten Übertragungsfunktion (t(p)); und
Navigieren (760) mit dem Medienelement zum bestimmten Bestandteil, wobei
der aktuelle Bestandteil im Medienelement durch einen Cursor (40) bei einer repräsentativen Position (p) auf der Linie oder der Kurve (30) angezeigt wird und die Eingabeoperation umfasst, dass der Anwender den Cursor (40) entlang der Linie oder der Kurve (30) zur anwendergewählten Position (p1) zieht,
**dadurch gekennzeichnet, dass**
der Prozessor (830) ferner ausgelegt ist zum Anzeigen (730) des Cursors (40) im Verlauf der Ziehoperation bei einer repräsentativen Position (p), die zum Index des aktuellen Bestandteils in der Folge linear proportional ist.

## Revendications

**1.** Procédé de navigation commandée par l'utilisateur à l'intérieur d'un segment de média comportant une suite d'éléments, le procédé comportant les étapes consistant à :

définir (710) une ligne ou une courbe (30) sur un affichage graphique (20) pour commander la navigation ;

définir (720) une fonction de transfert (t(p)) qui associe une pluralité de positions (p) le long de la ligne ou de la courbe (30) à des éléments respectifs de la suite, la fonction de transfert (t(p)) définissant une correspondance biunivoque non linéaire entre les positions (p) le long de la ligne ou de la courbe (30) et les éléments de la suite ;

détecter (740) une opération d'entrée par l'utilisateur, l'opération d'entrée sélectionnant une position (p1) de la pluralité de positions (p) ;

déterminer (750) l'élément de la suite qui correspond à la position (p1) sélectionnée par l'utilisateur, selon la fonction de transfert (t(p)) définie ; et

naviguer (760) à l'intérieur du segment de média jusqu'à l'élément déterminé,

l'élément actuel à l'intérieur du segment de média étant indiqué par un curseur (40) dans une position (p) représentative sur la ligne ou la courbe (30), et

l'opération d'entrée comportant le glissement, par l'utilisateur, du curseur (40) le long de la ligne ou de la courbe (30) jusqu'à la position (p1) sélectionnée par l'utilisateur, et

**caractérisé en ce que** :

le procédé comporte en outre l'affichage (730) du curseur (40) pendant toute l'opération de glissement dans une position (p) représentative qui est linéairement proportionnelle à l'indice de l'élément actuel dans la suite.

2. Procédé selon la revendication 1, comportant en outre les étapes consistant à :

définir (660) une position actuelle (p0) le long de la ligne ou de la courbe (30) qui représente l'élément actuel du segment de média,

la fonction de transfert (t(p)) étant définie de telle façon que

à une première distance le long de la ligne ou de la courbe (30) à partir de la position actuelle (p0), un incrément dans la position (p1) sélectionnée par l'utilisateur soit associé à un premier incrément dans l'élément de la suite ; et

à une seconde distance le long de la ligne ou de la courbe (30) à partir de la position actuelle (p0), un incrément identique dans la position (p1) sélectionnée par l'utilisateur soit associé à un second incrément dans l'élément de la suite,

la seconde distance étant supérieure à la première distance et le second incrément étant supérieur au premier incrément.

3. Procédé selon la revendication 1 ou la revendication 2, la fonction de transfert (t(p)) étant définie par morceaux par une ou plusieurs expressions algébriques.

4. Procédé selon la revendication 3, la fonction de transfert (t(p)) étant de la forme :

$$t(p) = \frac{D}{L} \cdot \left[ \frac{(p - p_0)^n}{(-p_0)^{n-1}} + p_0 \right]$$

si p < p0

$$t(p) = \frac{D}{L} \cdot \left[ \frac{(p - p_0)^n}{(L - p_0)^{n-1}} + p_0 \right]$$

si p ≥ p0

où t est l'indice de l'élément actuel à l'intérieur du segment de média, p est la position du curseur (40) pendant l'opération de glissement, $p_0$ est la position du curseur (40) avant que l'opération de glissement soit entamée, D est la durée du segment de média, L est la longueur de la ligne ou de la courbe (30), et n est l'exposant de la fonction polynomiale, qui est supérieur ou égal à 2.

5. Procédé selon la revendication 3, la fonction de transfert (t(p)) étant de la forme :

$$t(p) = \left[ \frac{k \cdot (p - p_0)}{(k+1) \cdot p_0 + (p - p_0)} + 1 \right] \cdot \frac{D}{L} \cdot p_0$$

si $p < p_0$

$$t(p) = \left[ \frac{k \cdot (p - p_0)}{(k+1) \cdot (L - p_0) - (p - p_0)} - 1 \right] \cdot \left( D - \frac{D}{L} \cdot p_0 \right) + D$$

si $p \geq p_0$ où t est l'indice de l'élément actuel à l'intérieur du segment de média, p est la position du curseur (40) pendant l'opération de glissement, $p_0$ est la position du curseur (40) avant que l'opération de glissement soit entamée, D est la durée du segment de média, L est la longueur de la ligne ou de la courbe (30), et k est un paramètre qui est un nombre réel supérieur à zéro.

6. Procédé selon l'une quelconque des revendications précédentes :

le segment de média étant un document ;
les éléments étant des pages, des paragraphes ou des lignes du document ; et
l'étape (760) de navigation à l'intérieur du segment de média comportant l'affichage de la page, du paragraphe ou de la ligne du document dont l'indice à l'intérieur du document correspond à la position (p1) sélectionnée par l'utilisateur, selon la fonction de transfert (t(p)).

7. Procédé selon l'une quelconque des revendications précédentes :

le segment de média étant une vidéo ;
les éléments étant des trames de la vidéo ; et
l'étape (760) de navigation à l'intérieur du segment de média comportant l'affichage de la trame dont l'indice temporel (t1) à l'intérieur de la vidéo correspond à la position (p1) sélectionnée par l'utilisateur, selon la fonction de transfert (t(p)).

8. Procédé selon l'une quelconque des revendications précédentes :

le segment de média étant une séquence audio ;
les éléments étant des trames ou des échantillons de la séquence audio ; et
l'étape (760) de navigation à l'intérieur du segment de média comportant la lecture de l'audio, en partant de la trame ou de l'échantillon dont l'indice temporel (t1) à l'intérieur de la séquence audio correspond à la position (p1) sélectionnée par l'utilisateur, selon la fonction de transfert (t(p)).

9. Procédé selon la revendication 7 ou la revendication 8, la ligne ou la courbe (30) étant une barre de progression et la navigation comportant l'avance ou le retour rapide à l'intérieur de la séquence audio ou vidéo en réponse au glissement par l'utilisateur d'un coulisseau (40) le long de la barre (30) de progression.

10. Programme d'ordinateur comportant des moyens de code de programme d'ordinateur prévus pour commander un dispositif informatique physique (10) pour réaliser toutes les étapes de l'une quelconque des revendications précédentes si ledit programme est exécuté sur le dispositif informatique physique (10), ledit programme étant de préférence incorporé sur un support non transitoire (840) lisible par ordinateur.

11. Appareil lecteur (10) de média, destiné à lire ou à afficher un segment de média comportant une suite d'éléments, l'appareil (10) comportant :

un écran (810) d'affichage, destiné à présenter à un utilisateur une interface graphique servant à commander la navigation à l'intérieur du segment de média ;
un dispositif (820) d'entrée, destiné à une entrée d'utilisateur ; et
un processeur (830), destiné à traiter l'entrée d'utilisateur afin de commander la navigation, le processeur (830) étant conçu pour :

définir (710) une ligne ou une courbe (30) sur l'écran (810) d'affichage pour commander la navigation ;

définir (720) une fonction de transfert (t(p)) qui associe une pluralité de positions (p) le long de la ligne ou de la courbe (30) à des éléments respectifs de la suite, la fonction de transfert (t(p)) définissant une correspondance biunivoque non linéaire entre les positions (p) le long de la ligne ou de la courbe (30) et les éléments de la suite ;

détecter (740), à l'aide du dispositif (820) d'entrée, une opération d'entrée par l'utilisateur, l'opération d'entrée sélectionnant une position (p1) de la pluralité de positions (p) ;

déterminer (750) l'élément de la suite qui correspond à la position (p1) sélectionnée par l'utilisateur, selon la fonction de transfert (t(p)) définie ; et

naviguer (760) à l'intérieur du segment de média jusqu'à l'élément déterminé,

l'élément actuel à l'intérieur du segment de média étant indiqué par un curseur (40) dans une position (p) représentative sur la ligne ou la courbe (30), et l'opération d'entrée comportant le glissement, par l'utilisateur, du curseur (40) le long de la ligne ou de la courbe (30) jusqu'à la position (p1) sélectionnée par l'utilisateur, et

**caractérisé en ce que** :

le processeur (830) est en outre conçu pour afficher (730) le curseur (40) pendant toute l'opération de glissement dans une position (p) représentative qui est linéairement proportionnelle à l'indice de l'élément actuel dans la suite.

10

20

06:30

50

40

30

FIG 1

D: movie Duration

t: time index
within the movie

p: position on the progress bar

L: Length of progress bar

FIG 2

FIG 3

FIG 4

FIG 5

FIG 6

Define a line (progress bar) on the display for controlling navigation 710

Define a nonlinear transfer function for mapping positions along the line to indices within the media item 720

Indicate the current index by displaying a cursor at a representative position on the line, according to a linear transfer function 730

Detect a dragging operation by the user, whereby the user selects a different position on the line 740

Determine the corresponding index according to the transfer function 750

Navigate within the media item to the determined index 760

Update the cursor position to indicate the new index, according to the linear transfer function 770

FIG 7

FIG 8

FIG 9

FIG 10

FIG 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2530677 A2
- US 20020012526 A1
- GB 2344453 A
- EP 2466279 A1
- US 20090282362 A

**Non-patent literature cited in the description**

- **WOLFGANG HÜRST ; PHILIPP JARVERS.** Interactive, Dynamic Video Browsing with the Zoomslider Interface. *IEEE 2005 International Conference on Multimedia and Expo (ICME 2005),* 06 July 2005